# EUROPÄISCHE PATENTSCHRIFT

(11) **EP 2 210 241 B1**
(45) Veröffentlichungstag und Bekanntmachung des Hinweises auf die Patenterteilung: **28.12.2011**
(21) Anmeldenummer: 08848016.5
(22) Anmeldetag: 31.10.2008
(51) Int. Cl.: G07F 7/10, G06F 21/00

(54) **DATEN VERARBEITENDE VORRICHTUNG UND VERFAHREN ZUM BETREIBEN EINER DATEN VERARBEITENDEN VORRICHTUNG**
DATA PROCESSING DEVICE AND METHOD FOR OPERATING A DATA PROCESSING DEVICE
DISPOSITIF DE TRAITEMENT DE DONNÉES ET PROCÉDÉ D'UTILISATION D'UN DISPOSITIF DE TRAITEMENT DE DONNÉES

(30) Priorität: 06.11.2007 DE 102007052826
(43) Veröffentlichungstag der Anmeldung: 28.07.2010
(73) Patentinhaber: Giesecke & Devrient GmbH, 81677 München (DE)
(72) Erfinder: WEISS, Dieter, 81825 München (DE)
(86) Internationale Anmeldenummer: PCT/EP2008/064814
(87) Internationale Veröffentlichungsnummer: WO 2009/059935

(56) Entgegenhaltungen:
- EP-A- 1 117 062
- WO-A-99/38117
- WO-A2-2007/023482
- WO-A2-2007/023482
- GB-A- 2 421 093
- US-A1- 2002 169 608
- US-A1- 2005 275 661
- PIM TUYLS ET AL: "Visual Crypto Displays Enabling Secure Communications" SECURITY IN PERVASIVE COMPUTING; [LECTURE NOTES IN COMPUTER SCIENCE;;LNCS], SPRINGER-VERLAG, BERLIN/HEIDELBERG, Bd. 2802, 27. Januar 2004 (2004-01-27), Seiten 271-284, XP019002204 ISBN: 978-3-540-20887-7

## Beschreibung

Die Erfindung betrifft eine Daten verarbeitende Vorrichtung mit einem vertrauenswürdigen Bereich und einem nicht-vertrauenswürdigen Bereich sowie ein Verfahren zum Betreiben einer derartigen, Daten verarbeitenden Vorrichtung.

Es sind Prozessoren für Endgeräte bekannt, welche einen vertrauenswürdigen und einen "normalen", nicht-vertrauenswürdigen Bereich umfassen. Der vertrauenswürdige Bereich wird auch als "Trusted" oder "TrustZone" bezeichnet. Bei solchen Prozessoren werden Sicherheitsanwendungen in dem vertrauenswürdigen Bereich ausgeführt, wohingegen Anwendungen, welche nicht sicherheitskritisch sind, in dem nicht-vertrauenswürdigen Bereich Ablaufen. Ein Prozessor der beschriebenen Art wurde von der Firma ARM entwickelt, wobei eine detaillierte Beschreibung in dem White Paper "TrustZone: Integrated Hardware and Software Security" von T. Alves und D. Felton, Juli 2004 wiedergegeben ist. Auf diese Beschreibung wird hiermit Bezug genommen. Bei dieser Vorrichtung wird überwacht, ob der Prozessor in dem vertrauenswürdigen oder in dem nicht-vertrauenswürdigen Bereich betrieben wird. Ferner wird ein Umschalten zwischen dem vertrauenswürdigen und dem nicht-vertrauenswürdigen Bereich überwacht.

Aus der DE 41 42 964 C2 ist ein Datenaustauschsystem bekannt, bei dem eine Berechtigung eines Benutzers durch die Überprüfung eines vom Benutzer eingegebenen persönlichen Merkmals, wie z.B. einer persönlichen Identifizierungsnummer (PIN), festgestellt wird. Dieses Datenaustauschsystem umfasst einen dem Benutzer zugeordneten Datenträger (wie z.B. eine Ausweiskarte, eine Kreditkarte oder eine Zugangskarte), eine mit dem Datenträger kommunizierende Vorrichtung und eine Anzeigeeinheit. In dem Datenträger ist ein dem Benutzer bekanntes Datenwort enthalten, das vor der Aufforderung zur Eingabe des persönlichen Merkmals dem Benutzer angezeigt wird. Damit wird dem Benutzer die Möglichkeit gegeben, vor der Preisgabe seines persönlichen Merkmals die Echtheit des Systems bzw. der Vorrichtung zu überprüfen.

Ferner sind aus der EP 1 046 976 B1 ein Verfahren und eine Vorrichtung bekannt, welche einen Mechanismus bereitstellen, um die Authentifizierung eines Systems zu ermöglichen. Diese Authentifizierung wird durchgeführt, bevor der Benutzer ein ihm bekanntes Geheimnis in das System eingibt. Hierzu werden der Vorrichtung Nutzer bezogene Daten übermittelt, welche die Vorrichtung dazu verwendet, eine eindeutige Nachricht, welche diesem Nutzer zugeordnet ist, zu ermitteln. Diese eindeutige Nachricht wird dem Benutzer zur Wahrnehmung ausgegeben. Da die eindeutige Nachricht durch den Benutzer festgelegt oder nur diesem bekannt ist, ist dieser in der Lage, die Authentizität des Systems festzustellen. Die eindeutige Nachricht kann hierbei abhängig von einem oder mehreren Parametern ausgebildet sein.

WO2007/023482A2 schlägt als Schutz gegen ein unberechtigtes Filmen eines dem Publikum im Kinosaal projizierten Filmes vor, die Projektionsfrequenz zu erhöhen und jeweils nur Filmsegmente nacheinander zu projizieren. US2005/0275 661 A1 verwendet ein Bild als Hintergrund für ein dem Benutzer angezeigtes Fenster, um dem Benutzer eine sichere Ausführungsumgebung anzuzeigen. In GB 2421093 wird vorgeschlagen, dass der Benutzer ein entsprechendes Bild als "privaten Indikator" für die sichere Umgebung bei der ersten Nutzung eines Gerätes auswählt.

Es ist Aufgabe der vorliegenden Erfindung, eine sichere Vorrichtung sowie ein sicheres Verfahren anzugeben, dem Benutzer einen Betriebszustand der Vorrichtung darzustellen. Diese Aufgabe wird durch den Gegenstand der unabhängigen Ansprüche gelöst.

Vorteilhafte Ausgestaltungen ergeben sich aus den abhängigen Patentansprüchen.

Erfindungsgemäß ist bei einer gattungsgemäßen Daten verarbeitenden Vorrichtung vorgesehen, dass bei einer in dem vertrauenswürdigen Bereich ausgeführten sicheren Anwendung ein von einem Nutzer der Vorrichtung festgelegtes und in der Vorrichtung gespeichertes Datenwort ausgebbar ist. Hierdurch wird dem Benutzer der Vorrichtung die Möglichkeit gegeben, den Betriebszustand der Vorrichtung bzw. die von der Vorrichtung aktuell ausgeführte Anwendung zu erkennen, wobei insbesondere auf einfache Weise eine Unterscheidung zwischen einer sicheren und einer unsicheren Anwendung möglich ist.

Das Datenwort kann gemäß einer zweckmäßigen Ausgestaltung visueller Natur sein. Ebenso ist eine Ausgestaltung in audio-visueller Natur vorstellbar. Das Datenwort kann eine Graphik (z.B. ein Bild) und/oder eine Zahlen-/Buchstabenkombination sein. Das Datenwort wird dazu verwendet, die in dem vertrauenswürdigen Bereich ausgeführte sichere Anwendung zu identifizieren.

In einer Ausgestaltung ist deshalb bei einer erfindungsgemäßen Vorrichtung die sichere Anwendung mit dem Datenwort personalisiert. Umfasst die Vorrichtung in dem vertrauenswürdigen Bereich eine Mehrzahl an sicheren Anwendungen, so ist es zweckmäßig, wenn jede der sicheren Anwendungen mit einem eigenen, gegebenenfalls eindeutigen Datenwort personalisiert ist. Ebenso kann vorgesehen sein, dass der vertrauenswürdige Bereich mit dem Datenwort personalisiert ist. Bei dieser Variante erkennt der Benutzer lediglich, dass eine Anwendung in dem vertrauenswürdigen Bereich ausgeführt wird. Der Benutzer ist jedoch nicht in der Lage, anhand des ihm ausgegebenen Datenworts zu erkennen, um welche von gegebenenfalls mehreren sicheren Anwendungen es sich aktuell handelt.

In einer weiteren zweckmäßigen Ausgestaltung ist vorgesehen, dass ein erstes und ein zweites Datenwort in unterschiedlicher Art und/ oder Position ausgegeben werden, wobei das erste Datenwort den vertrauenswürdigen Bereich und das zweite Datenwort der sicheren Anwendung des vertrauenswürdigen Bereichs zugeordnet ist. Bei dieser Ausgestaltung ist die Erkennbarkeit, dass es sich um eine konkrete Anwendung in dem sicheren Bereich handelt, besonders groß.

Eine weitere Ausgestaltung der erfindungsgemäßen Vorrichtung sieht vor, dass bei der Ausführung der sicheren Anwendung Inhalte auf einer Anzeigevorrichtung ausgegeben werden und das Datenwort über diesen Inhalt gelegt ist, wenn das Datenwort visuell darstellbar ist. Das individuelle Datenwort, das ein von dem Benutzer gewähltes Geheimnis darstellt, kann gemäß dieser Ausgestaltung als eine Art Wasserzeichen über den Bildschirminhalt gelegt sein, so dass einerseits die von der Anwendung erzeugten Informationen gut wahrnehmbar sind und andererseits für den Benutzer ohne Weiteres erkennbar ist, um welche sichere Anwendung es sich handelt.

Die Ausgabevorrichtung kann zur Ausgabe von Daten der sicheren oder unsicheren Anwendung und des Datenworts gemäß einer weiteren Ausgestaltung Bestandteil der Vorrichtung oder Bestandteil einer weiteren Vorrichtung sein; mit welcher die Vorrichtung zwecks Datenaustauschs koppelbar ist. Bei dieser Ausgestaltung kann beispielsweise vorgesehen sein, dass Daten der sicheren Anwendung auf der Anzeigevorrichtung der Vorrichtung und Daten einer unsicheren Anwendung auf einer externen Vorrichtung, mit welcher die erfindungsgemäße Vorrichtung gekoppelt ist, dargestellt werden.

Das Datenwort zur Signalisierung einer in dem vertrauenswürdigen Bereich ausgeführten sicheren Anwendung kann gemäß einer weiteren Ausgestaltung in unterschiedlichen Arten und/ oder an unterschiedlichen Positionen ausgegeben werden.

Ferner kann vorgesehen sein, dass beim Beginn und/oder beim Ende der Ausführung der sicheren Anwendung das Datenwort ausgegeben wird. Hierdurch wird dem Benutzer zu Beginn der Ausführung der sicheren Anwendung signalisiert, dass es sich um eine solche sichere Anwendung handelt. Ebenso kann das Ende der Ausführung der sicheren Anwendung durch die Ausgabe des Datenworts signalisiert sein.

Eine weitere zweckmäßige Ausgestaltung sieht vor, dass die erfindungsgemäße Vorrichtung über eine Steuerung für den vertrauenswürdigen und den nicht-vertrauenswürdigen Bereich verfügt, wobei diese sicherstellt, dass bei einem Wechsel der sicheren Anwendung zu einer in dem nicht-vertrauenswürdigen Bereich ausgeführten unsicheren Anwendung das Datenwort nicht mehr ausgegeben wird. Ist das Datenwort z.B. visueller Natur, so wird durch die Steuerung sichergestellt, dass dieses beim Wechsel zu einer unsicheren Anwendung gelöscht wird. Die Steuerung kann beispielsweise durch ein dem sicheren Bereich zugeordnetes eigenes Betriebssystem erfolgen.

Gemäß einer weiteren zweckmäßigen Ausgestaltung wird durch die Steuerung sichergestellt, dass die Ausführung der sicheren Anwendung nicht durch eine in dem nicht-vertrauenswürdigen Bereich ausgeführte unsichere Anwendung unterbrechbar ist.

Das erfindungsgemäße Verfahren zum Betreiben einer Daten verarbeitenden Vorrichtung weist die gleichen Vorteile auf, wie sie in Verbindung mit der oben erläuterten Vorrichtung beschrieben wurden.

Von der Erfindung ist ferner ein Computerprogrammprodukt umfasst, welches maschinenlesbare Programmbefehle für eine Steuerungseinheit der Vorrichtung aufweist, die diese zur Ausführung eines erfindungsgemäßen Verfahrens veranlassen. Das erfindungsgemäße Computerprogrammprodukt kann ein körperliches Medium mit gespeicherten Programmbefehlen sein, beispielsweise ein Halbleiterspeicher, eine Diskette oder eine CD-ROM. Das Computerprogrammprodukt kann auch ein nicht-körperliches Medium sein, beispielsweise ein über ein Computernetzwerk übermitteltes Signal.

Die Erfindung ist insbesondere im Umfeld von Ausweiskarten, Kreditkarten, SIM (Subscriber Identity Module)-Karten oder Zugangsdaten vorteilhaft einsetzbar. Bei diesen muss der Benutzer der Vorrichtung (des Datenträgers) häufig eine persönliche Identifizierungsnummer (PIN) eingeben. Diese wird auf ihre Identität mit einer dem rechtmäßigen Benutzer zugeordneten Identifizierungsnummer geprüft. Die Erfindung ermöglicht dabei die Erkennung einer vertrauenswürdigen PIN-Abfrage durch die Anzeige des geheimen Datenwortes, das nur dem Nutzer bekannt ist. Hierdurch können Manipulationen an der Vorrichtung erkannt werden.

Die Erfindung wird nachfolgend anhand der Zeichnungen näher erläutert. Es zeigen:
- Fig.: 1 eine schematische Darstellung einer erfindungsgemäßen Daten verarbeitenden Vorrichtung, und

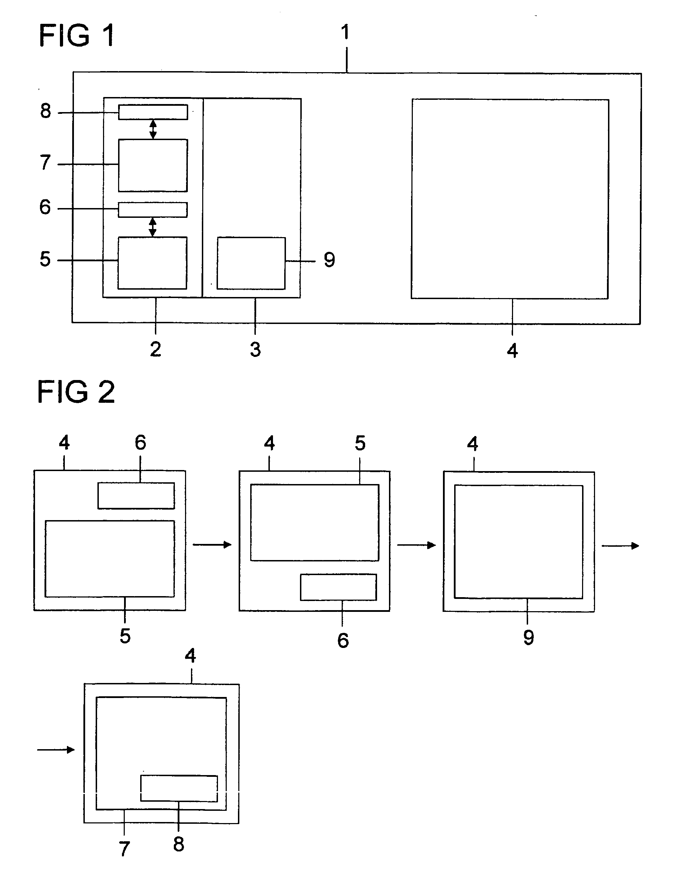

- Fig. 2: die von einer Anzeigevorrichtung der erfindungsgemäßen Vorrichtung dargestellten Informationen bei wechselnd ausgeführten Anwendungen in der Vorrichtung.

Fig. 1 zeigt in schematischer Darstellung eine erfindungsgemäße, Daten verarbeitende Vorrichtung 1. Die Vorrichtung 1, welche beispielsweise ein Endgerät (wie z.B. ein Mobiltelefon) darstellt, umfasst neben einer optionalen Anzeigevorrichtung 4 einen vertrauenswürdigen Bereich 2 und einen nicht-vertrauenswürdigen Bereich 3 zur Ausführung und Speicherung jeweiliger sicherer Anwendungen 5, 7 und unsicherer Anwendungen 9. In einer Variante können der vertrauenswürdige und der nicht-vertrauenswürdige Bereich 2, 3 jeweils über einen eigenen Prozessor und einen eigenen Speicher zum Ausführen und Speichern der jeweiligen Anwendungen verfügen. In einer anderen Ausgestaltung können sich der erste und der zweite Bereich 2, 3 einen Prozessor und/ oder einen Speicher teilen, wobei sowohl der Prozessor als auch der Speicher dann jeweils über den vertrauenswürdigen und nicht-vertrauenswürdigen Bereich verfügen bzw. auf diesen zugreifen. Die genaue technische Ausgestaltung von Prozessor und Speicher ist für die erfindungsgemäße Vorrichtung nicht von Bedeutung, so dass hierauf auch nicht näher eingegangen wird. Eine mögliche Realisierungsvariante ist in dem eingangs genannten White Paper der Firma ARM von T. Alves und D. Felton beschrieben, auf welches hiermit Bezug genommen wird. Für die vorliegende Erfindung von Bedeutung ist jedoch, dass es sichere bzw. sicherheitskritische Anwendungen 5, 6 gibt, welche in dem vertrauenswürdigen Bereich ausgeführt werden, während unsichere oder nicht-sicherheitskritische Anwendungen 9 in dem nicht-vertrauenswürdigen Bereich 3 ausgeführt werden.

Jeder der sicheren Anwendungen 5, 7 ist ein von einem Benutzer der Vorrichtung 1 ausgewähltes Geheimnis, welches als Datenwort 6, 8 bezeichnet wird, zugeordnet. Bei dem Datenwort oder Geheimnis kann es sich um eine Graphik und/ oder eine Zahlen-/ Buchstabenkombination handeln. Die Zuordnung eines jeweiligen Datenworts 6, 8 zu einer jeweiligen sicheren Anwendung 5, 7 ist in der schematischen Figur 1 durch einen Pfeil symbolisiert. Die Zuordnung eines Datenworts 6, 8 zu einer sicheren Anwendung 5, 7 wird auch als Personalisierung bezeichnet. Dieser Vorgang kann beispielsweise durch einen sog. Trusted Service erfolgen. Die personalisierten, sicheren Anwendungen 5, 7 können über diesen Trusted Service in dem sicheren Bereich 2 hinterlegt werden.

Bei der Ausführung einer der sicheren Anwendungen 5, 7 werden beispielsweise Daten über die in der Vorrichtung 1 integrierte Anzeigevorrichtung 4 dargestellt. Gleichzeitig wird das der ausgeführten, sicheren Anwendung 5, 7 zugeordnete Datenwort 6, 8 ausgegeben. Handelt es sich bei dem Datenwort 6, 8 um ein visuelles Geheimnis, so wird dieses ebenfalls auf der Anzeigevorrichtung 4 dargestellt. Anhand des dargestellten, nur dem Benutzer der Vorrichtung 1 bekannten Geheimnisses, kann dieser nun erkennen, dass gerade eine sicherheitskritische Anwendung ausgeführt wird. Hierdurch hat der Benutzer die Gewähr, dass die sicherheitskritische Anwendung nicht manipuliert oder gefälscht wurde.

Bei einer der sicherheitskritischen Anwendungen 5, 7 kann es sich beispielsweise um eine Abfrage einer persönlichen Identifikation (sog. PIN-Abfrage) handeln. Um zu verhindern, dass für eine solche PIN-Abfrage eine andere Anwendung aus dem nicht-vertrauenswürdigen Bereich 3 verwendet wird, wird durch eine in Fig. 1 nicht näher dargestellte Steuerung sichergestellt, dass die Ausführung einer sicheren Anwendung 5, 7 nicht durch eine unsichere Anwendung 9, welche dem nicht-vertrauenswürdigen Bereich 3 zugeordnet ist, unterbrochen werden kann.

Die Darstellung des einer betreffenden Anwendung 5, 7 zugeordneten Datenworts 6, 8 kann an einer beliebigen Stelle der Ausgabevorrichtung 4 erfolgen. Es kann ebenso vorgesehen sein, dass die Position und/ oder die Art der Darstellung des Datenwortes sich während der Ausführung der betreffenden Anwendung ändern. Beispielsweise kann das Datenwort als sichtbares Wasserzeichen auf der Anzeigevorrichtung 4 mit Hilfe eines über die Anzeigevorrichtung von oben nach unten laufenden Balkens dargestellt werden. In dem Balken wird jeweils nur ein Teil des Datenwortes dargestellt. Durch das Wandern des Balkens entsteht für den Benutzer jedoch ein als Ganzes wahrnehmbares "Wasserzeichen". Die Verwendung eines solchen, laufenden Balkens, hat den Vorteil, dass nur ein Teil des Wasserzeichens jeweils tatsächlich dargestellt und gegebenenfalls von einem Angreifer extrahiert werden kann. Ferner ist ein solches "Wasserzeichen" auf diese Art für einen Angreifer nur schwer manipulierbar bzw. imitierbar.

Alternativ zu der in Fig. 1 gezeigten Zuordnung eines jeweiligen Datenworts 6, 8 zu einer jeweiligen Anwendung 5, 7 kann auch vorgesehen sein, ein Datenwort dem vertrauenswürdigen Bereich zuzuordnen. In diesem Fall würde das ebenfalls von dem Benutzer der Vorrichtung 1 vergebene Datenwort bei der Ausführung jeder sicheren Anwendung in dem vertrauenswürdigen Bereich 2 ausgegeben, z.B. dargestellt werden.

In einer weiteren alternativen Ausgestaltung könnte ein jeweiliges Datenwort sowohl dem vertrauenswürdigen Bereich 2 als auch einer jeweiligen in dem vertrauenswürdigen Bereich 2 ablaufenden Anwendung 5, 7 zugeordnet werden. Damit könnten auf der Anzeigevorrichtung 4 zwei Datenwörter, z.B. in unterschiedlicher Art und/ oder Position angezeigt bzw. ausgegeben werden, wobei das eine Datenwort dem vertrauenswürdigen Bereich und das andere Datenwort der konkreten Anwendung zugeordnet ist.

Fig. 2 zeigt eine beispielhafte Darstellungsabfolge der Anzeigevorrichtung 4 beim zeitlichen Ablauf unterschiedlicher Anwendungen der Vorrichtung 1. Zunächst läuft auf der Vorrichtung 1 die sichere Anwendung 5 ab. Hierbei werden Daten auf der Anzeigevorrichtung 4 zur Anzeige gebracht, wobei die der Anwendung zugeordneten Daten mit 5 gekennzeichnet sind. Um dem Benutzer der Vorrichtung die Ausführung der sicheren Anwendung 5, welche in dem vertrauenswürdigen Bereich 2 abläuft, zu signalisieren, wird auf dem Display 4 zusätzlich das von dem Benutzer der Anwendung 5 zugeordnete Datenwort 6 angezeigt. Die Darstellung des Datenworts 6 und die Darstellung der Daten der Anwendung 5 erfolgen in unterschiedlichen Bereichen.

Wie bereits beschrieben, kann das Datenwort 6 bei einer länger dauernden Ausführung der Anwendung 5 auch an unterschiedlichen Positionen der Anzeigevorrichtung 4 dargestellt werden. Dies ist in der zweiten Ansicht der Fig. 2 dargestellt, in welcher die Anwendung 5 nunmehr im oberen Bereich der Anzeigevorrichtung 4 und das zugeordnete Datenwort 6 im unteren Bereich der Anzeigevorrichtung 4 eingeblendet sind. Ein Wechsel der Position kann z.B. alle 30 Sekunden erfolgen.

Erfolgt ein Wechsel von der sicheren Anwendung 5 zu der unsicheren Anwendung 9 (unter Kontrolle einer Steuerung der Vorrichtung 1) so wird hierbei das Datenwort 6 ausgeblendet. Auf der Anzeigevorrichtung 4 kommt bei Ausführung der unsicheren Anwendung 9 lediglich die Anwendung 9 zur Ansicht. Wird im Weiteren dann die Anwendung 7 ausgeführt, so wird das von dem Benutzer zugeordnete Datenwort 8 eingeblendet, wobei dies in der gezeigten Form durch eine Überblendung geschieht. Wird die Anwendung 7 beendet oder erfolgt ein Wechsel zu einer unsicheren Anwendung, wird das Datenwort 8 wieder ausgeblendet.

Alternativ zu einer kontinuierlichen Darstellung des Datenworts während der Ausführung der zugeordneten Anwendung kann zu Beginn und Ende der sicheren Anwendung das zugeordnete Datenwort ausgegeben werden.

In den beschriebenen Ausführungsbeispielen wurde als Datenwort ein visuelles Geheimnis verwendet. Durch die Erfindung ist es möglich, einem Benutzer eindeutig anzuzeigen, ob eine gerade ausgeführte Anwendung in einem vertrauenswürdigen oder nicht-vertrauenswürdigen Bereich abläuft.

Die Erfindung ist analog durchführbar, wenn die Anzeigevorrichtung nicht Bestandteil der erfindungsgemäßen, beschriebenen Vorrichtung ist, sondern in einem anderen Gerät verkörpert ist, mit welchem die Vorrichtung 1 zwecks Datenaustauschs verbunden ist.

## Patentansprüche

1. Daten verarbeitende Vorrichtung (1), insbesondere tragbares Endgerät, mit einem vertrauenswürdigen Bereich (2) und einem nicht-vertrauenswürdigen Bereich (3),
wobei bei einer in dem vertrauenswürdigen Bereich (2) ausgeführten sicheren Anwendung (5, 7) ein von einem Nutzer der Vorrichtung festgelegtes und in der Vorrichtung (1) gespeichertes Datenwort (6, 8) dem Nutzer auf einer Anzeigevorrichtung (4) der Vorrichtung (1) ausgebbar ist,
wobei bei der Ausführung der sicheren Anwendung (5, 7) Inhalte auf der Anzeigevorrichtung (4) ausgegeben werden und das Datenwort (6, 8) als Wasserzeichen über diesen Inhalt gelegt ist,
**dadurch gekennzeichnet, dass**
das Datenwort dem Benutzer mit Hilfe eines laufenden Balkens dargestellt wird, in dem jeweils nur ein Teil des Datenwortes dargestellt ist, wobei durch das Wandern des Balkens das für den Nutzer als Ganzes wahrnehmbare Wasserzeichen entsteht.

2. Vorrichtung nach Anspruch 1, **dadurch gekennzeichnet, dass** das Datenwort (6, 8) eine Graphik und/ oder eine Zahlen-/ Buchstabenkombination ist.

3. Vorrichtung nach einem der vorherigen Ansprüche, **dadurch gekennzeichnet, dass** die sichere Anwendung (5, 7) mit dem Datenwort (6, 8) personalisiert ist.

4. Vorrichtung nach einem der vorherigen Ansprüche, **dadurch gekennzeichnet, dass** der vertrauenswürdige Bereich (2) mit dem Datenwort (6, 8) personalisiert ist.

5. Vorrichtung nach einem der vorherigen Ansprüche, **dadurch gekennzeichnet, dass** ein erstes und ein zweites Datenwort in unterschiedlicher Art und/oder Position ausgegeben werden, wobei das erste Datenwort dem vertrauenswürdigen Bereich (2) und das zweite Datenwort (6, 8) der sicheren Anwendung (5, 7) des vertrauenswürdigen Bereichs (2) zugeordnet ist.

6. Vorrichtung nach Anspruch 1 bis 5, **dadurch gekennzeichnet, dass** die Anzeigevorrichtung (4) zur Ausgabe von Daten der sicheren oder unsicheren Anwendung (5, 7, 9) und des Datenworts (6,8) Bestandteil der Vorrichtung (1) oder Bestandteil einer weiteren Vorrichtung ist, mit welcher die Vorrichtung (1) zwecks Datenaustausch koppelbar ist.

7. Vorrichtung nach einem der vorherigen Ansprüche, **dadurch gekennzeichnet, dass** das Datenwort (6, 8) in unterschiedlichen Arten und/ oder Positionen ausgegeben wird.

8. Vorrichtung nach einem der vorherigen Ansprüche, **dadurch gekennzeichnet, dass** beim Beginn und/oder beim Ende der Ausführung der sicheren Anwendung (5, 7) das Datenwort (6, 8) ausgegeben wird.

9. Vorrichtung nach einem der vorherigen Ansprüche, **dadurch gekennzeichnet, dass** diese über eine Steuerung für den vertrauenswürdigen und den nicht-vertrauenswürdigen Bereich (2, 3) verfügt, wobei die Steuerung sicherstellt, dass bei einem Wechsel der sicheren Anwendung (5, 7) zu einer in dem nicht-vertrauenswürdigen Bereich (3) ausgeführten unsicheren Anwendung (9) das Datenwort (6, 8) nicht mehr ausgegeben wird.

10. Vorrichtung nach einem der vorherigen Ansprüche, **dadurch gekennzeichnet, dass** diese über eine Steuerung für den vertrauenswürdigen und den nicht-vertrauenswürdigen Bereich (2, 3) verfügt, wobei diese sicherstellt, dass die Ausführung der sicheren Anwendung (5, 7) nicht durch eine in dem nicht-vertrauenswürdigen Bereich (3) ausgeführte unsichere Anwendung (9) unterbrechbar ist.

11. Verfahren zum Betreiben einer Daten verarbeitenden Vorrichtung mit einem vertrauenswürdigen Bereich (2) und einem nicht-vertrauenswürdigen Bereich (3), bei dem bei einer in dem vertrauenswürdigen Bereich (2) ausgeführten sicheren Anwendung (5, 7) ein von einem Nutzer der Vorrichtung (1) festgelegtes und in der Vorrichtung (1) gespeichertes Datenwort (6, 8) als sichtbares Wasserzeichen auf einer Anzeigevorrichtung (4) ausgegeben wird, wobei bei der Ausführung der sicheren Anwendung (5, 7) Inhalte auf der Anzeigevorrichtung (4) ausgegeben werden und das Datenwort (6, 8) als Wasserzeichen über diesen Inhalt gelegt ist, **dadurch gekennzeichnet, dass** das Datenwort dem Benutzer mit Hilfe eines laufenden Balkens dargestellt wird, in dem jeweils nur ein Teil des Datenwortes dargestellt ist, wobei durch das Wandern des Balkens das für den Nutzer als Ganzes wahrnehmbare Wasserzeichen entsteht.

12. Computerprogrammprodukt, das maschinenlesbare Programmbefehle für eine Steuerungseinheit einer Vorrichtung (1) aufweist, die diese zur Ausführung eines Verfahrens nach Anspruch 11 veranlassen.

## Claims

1. A data processing apparatus (1), in particular portable end device, having a trustworthy area (2) and a non-trustworthy area (3),
whereby upon a secure application (5, 7) executed in the trustworthy area (2) a data word (6, 8) defined by a user of the apparatus and stored in the apparatus (1) is outputable to the user on a display device (4) of the apparatus (1),
whereby upon the execution of the secure application (5, 7) contents are output on the display device (4) and the data word (6, 8) is placed over said content as a watermark,
**characterized in that**
the data word is represented to the user by means of a sliding bar in which only a part of the data word is represented in each case, whereby through the travel of the bar there arises the watermark perceptible as a whole to the user.

2. The apparatus according to claim 1, **characterized in that** the data word (6, 8) is a graphic and/or a number and letter combination.

3. The apparatus according to any of the above claims, **characterized in that** the secure application (5, 7) is personalized with the data word (6, 8).

4. The apparatus according to any of the above claims, **characterized in that** the trustworthy area (2) is personalized with the data word (6, 8).

5. The apparatus according to any of the above claims, **characterized in that** a first and a second data word are output in different manner and/or position, whereby the first data word is associated with the trustworthy area (2) and the second data word (6, 8) with the secure application (5, 7) of the trustworthy area (2).

6. The apparatus according to claims 1 to 5, **characterized in that** the display device (4) for outputting data of the secure or insecure application (5, 7, 9) and the data word (6, 8) is part of the apparatus (1) or part of a further apparatus to which the apparatus (1) is coupleable for the purpose of data exchange.

7. The apparatus according to any of the above claims, **characterized in that** the data word (6, 8) is output in different manners and/or positions.

8. The apparatus according to any of the above claims, **characterized in that** at the onset and/or at the end of the execution of the secure application (5, 7) the data word (6, 8) is output.

9. The apparatus according to any of the above claims, **characterized in that** it has a control for the trustworthy and the non-trustworthy area (2, 3), whereby the control ensures that upon a change of the secure application (5, 7) to an insecure application (9) executed in the non-trustworthy area (3) the data word (6, 8) is no longer output.

10. The apparatus according to any of the above claims, **characterized in that** it has a control for the trustworthy and the non-trustworthy area (2, 3), whereby said control ensures that the execution of the secure application (5, 7) is not interruptible by an insecure application (9) executed in the non-trustworthy area (3).

11. A method for operating a data processing apparatus having a trustworthy area (2) and a non-trustworthy area (3), wherein upon a secure application (5, 7) executed in the trustworthy area (2) a data word (6, 8) defined by a user of the apparatus (1) and stored in the apparatus (1) is output on a display device (4) as a visible watermark, whereby upon the execution of the secure application (5, 7) contents are output on the display device (4) and the data word (6, 8) is placed over said content as a watermark, **characterized in that** the data word is represented to the user by means of a sliding bar in which only a part of the data word is represented in each case, whereby through the travel of the bar there arises the watermark perceptible as a whole to the user.

12. A computer program product which has machine-readable program commands for a control unit of an apparatus (1) which cause the latter to execute a method according to claim 11.

## Revendications

1. Dispositif (1) traitant des données, notamment terminal portable, comportant une zone de confiance (2) et une zone de non-confiance (3), un mot de données (6, 8) fixé par un usager du dispositif (1) et mémorisé dans le dispositif (1) pouvant, lors d'une application sûre (5, 7) exécutée dans la zone de confiance (2), être délivré à l'usager sur un dispositif d'affichage (4) du dispositif (1),
des contenus étant délivrés sur le dispositif d'affichage (4) et le mot de données (6, 8) étant disposé en tant que filigrane sur ce contenu lors de l'exécution de l'application sûre (5, 7)
**caractérisé en ce que**
le mot de données (6, 8) est représenté à l'usager à l'aide d'une barre continue dans laquelle n'est respectivement représentée qu'une partie du mot de données, le filigrane discernable dans son ensemble pour l'usager étant engendré par le cheminement de la barre.

2. Dispositif selon la revendication 1, **caractérisé en ce que** le mot de données (6, 8) est un graphique et/ou une combinaison de chiffres et/ou de lettres.

3. Dispositif selon une des revendications précédentes, **caractérisé en ce que** l'application sûre (5, 7) est personnalisée avec le mot de données (6, 8).

4. Dispositif selon une des revendications précédentes, **caractérisé en ce que** la zone de confiance (2) est personnalisée avec le mot de données (6, 8).

5. Dispositif selon une des revendications précédentes, **caractérisé en ce qu'**un premier et un second mot de données sont délivrés de différente façon et/ou en différente position, le premier mot de données étant affecté à la zone de confiance (2), et le second mot de données étant affecté à l'application sûre (5, 7) de la zone de confiance (2).

6. Dispositif selon revendication 1 à 5, **caractérisé en ce que**, pour la délivrance de données de l'application sûre (5, 7) ou non sûre et du mot de données (6, 8), le dispositif d'affichage (4) est partie constituante du dispositif (1) ou partie constituante d'un autre dispositif avec lequel le dispositif (1) peut être couplé dans le but d'un échange de données.

7. Dispositif selon une des revendications précédentes, **caractérisé en ce que** le mot de données (6, 8) est délivré de différentes façons et/ou en différentes positions.

8. Dispositif selon une des revendications précédentes, **caractérisé en ce que** le mot de données (6, 8) est délivré au début ou à la fin de l'exécution de l'application sûre (5, 7).

9. Dispositif selon une des revendications précédentes, **caractérisé en ce que** ce dernier dispose d'une commande pour la zone de confiance (2) et la zone de non-confiance (3), la commande assurant que le mot de données (6, 8) n'est plus délivré en cas de passage de l'application sûre (5, 7) à une application non sûre (9) exécutée dans la zone de non-confiance (3).

10. Dispositif selon une des revendications précédentes, **caractérisé en ce que** ce dernier dispose d'une commande pour la zone de confiance et la zone de non-confiance (2, 3) qui assure que l'exécution de l'application sûre (5, 7) ne peut pas être interrompue par une application non sûre (9) exécutée dans la zone de non-confiance (3).

11. Procédé d'exploitation d'un dispositif traitant des données, comportant une zone de confiance (2) et une zone de non-confiance (3), dans lequel, lors d'une application sûre (5, 7) exécutée dans la zone de confiance (2), un mot de données (6, 8) fixé par un usager du dispositif (1) et mémorisé dans le dispositif (1) est délivré en tant que filigrane visible sur un dispositif d'affichage (4), des contenus étant délivrés sur le dispositif d'affichage (4) et le mot de données (6, 8) étant disposé en tant que filigrane sur ce contenu lors de l'exécution de l'application sûre (5, 7), **caractérisé en ce que** le mot de données (6, 8) est représenté à l'usager à l'aide d'une barre continue dans laquelle n'est respectivement représentée qu'une partie du mot de données, le filigrane discernable dans son ensemble pour l'usager étant engendré par le cheminement de la barre.

12. Produit de programme d'ordinateur comportant des ordres de programme lisibles par machine destinés à une unité de commande d'un dispositif (1) et entraînant ce dernier à exécuter un procédé selon la revendication 11.
